(19) **Europäisches Patentamt**
**European Patent Office**
**Office européen des brevets**

(11) **EP 4 633 109 A1**

(12) **EUROPEAN PATENT APPLICATION**

(43) Date of publication:
**15.10.2025 Bulletin 2025/42**

(21) Application number: **25168172.2**

(22) Date of filing: **03.04.2025**

(51) International Patent Classification (IPC):
**H04L 47/11** (2022.01)    **H04L 47/12** (2022.01)
**H04W 28/02** (2009.01)

(52) Cooperative Patent Classification (CPC):
**H04W 28/0284; H04L 47/11; H04L 47/12;**
**H04W 28/0205; H04W 28/0247; H04W 28/0289**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **10.04.2024 FI 20245447**

(71) Applicant: **Nokia Solutions and Networks Oy**
**02610 Espoo (FI)**

(72) Inventors:
• **METSÄLÄ, Esa Markus**
**02200 Espoo (FI)**

• **NATARAJ, Kiran Kumar Mysore**
**560024 Bangalore (IN)**
• **RAMS, Tomasz**
**31-510 Krakow (PL)**
• **REINARTZ, Ole**
**89275 Elchingen (DE)**
• **NIGAM, Sumit**
**560015 Bangalore (IN)**

(74) Representative: **Novagraaf Technologies**
**Bâtiment O2**
**2, rue Sarah Bernhardt**
**CS90017**
**92665 Asnières-sur-Seine Cedex (FR)**

(54) **DEVICES, METHODS, APPARATUSES, AND COMPUTER READABLE MEDIA FOR FRONTHAUL**

(57)     Disclosed are devices, methods, apparatuses, and computer readable media for fronthaul. An example apparatus for a scheduler may include at least one processor and at least one memory. The at least one memory may store instructions that, when executed by the at least one processor, may cause the apparatus at least to: monitor a feedback notifying a status of congestion in fronthaul; and perform at least one of the following: adjusting link adaptation, or adjusting radio resource allocations with a radio resource limit which restricts an amount of radio resources available per a time interval for a given cell or a group of cells.

FIG. 7

**Description**

TECHNICAL FIELD

Various example embodiments relate to devices, methods, apparatuses, and computer readable media for fronthaul.

BACKGROUND

On enhanced common public radio interface (eCPRI) fronthaul, statistical multiplexing gains are expected, and the theoretical maximum peak of radio unit (RU) capacity is seldom reached, so transport links are most of the time underutilized. However, packet loss on fronthaul may cause hybrid automatic repeat request (HARQ) retransmissions, which will consume air interface resources. Radio resource management (RRM) has no knowledge of fronthaul transport and assumes the loss is due to the air interface. If fronthaul is congested, for example, due to overbooking or sudden high traffic load, packets may be lost. Due to the HARQ retransmissions, the packet loss in case of fronthaul congestion may trigger even more traffic to the already congested transport links. There will be more and more traffic in the fronthaul that gets lost, and the fronthaul is even more congested. On the other hand, if fronthaul is dimensioned never to lose a packet, statistical multiplexing gain on the fronthaul is limited, and such fronthaul causes high transport costs and is not feasible for many operators. Further, fronthaul streams are delay critical and must be delivered within given time constraints. Moreover, network topology in fronthaul varies and potentially includes switches and hub points, so individual link or node serves multiple RUs. The load in the network changes over time. When the network grows and more RUs are deployed, the new deployed RUs may provide more traffic, so the situation is different from the original one when the network was dimensioned. In addition, traffic from multiple baseband units (BBUs)/distributed units (DUs) with independent medium access control (MAC) schedulers is carried in the same fronthaul, each MAC scheduler has an impact to the congestion, and vice versa, the congestion in the fronthaul has impact to multiple BBUs/DUs and RUs.

SUMMARY

A brief summary of exemplary embodiments is provided below to provide basic understanding of some aspects of various embodiments. It should be noted that this summary is not intended to identify key features of essential elements or define scopes of the embodiments, and its sole purpose is to introduce some concepts in a simplified form as a preamble for a more detailed description provided below.

In a first aspect, disclosed is an apparatus for a first network device. The apparatus may include at least one processor and at least one memory. The at least one memory may store instructions that, when executed by the at least one processor, may cause the apparatus at least to: detect whether congestion occurs in fronthaul; and transmit to a second network device, a feedback for notifying the congestion if detecting the congestion in the fronthaul.

In embodiments, the apparatus may be configured to: determine a level of the congestion if detecting the congestion, and the feedback may notify the level of the congestion.

In embodiments, the apparatus may be configured to: monitor a counter for counting abnormal arriving messages.

In embodiments, the apparatus may be configured to: compare expected arriving messages and correctly received messages.

In embodiments, the apparatus may be configured to: detect the congestion based on at least one of the following: the counter or the comparison.

In embodiments, the apparatus may be configured to: determine the level of the congestion based on at least one of the following: the counter or the comparison.

In embodiments, the counter may count messages, sequence number errors of which indicate losses of the messages.

In embodiments, the counter may count messages which arrive later than a receive window.

In embodiments, the first network device may be a radio unit, and the second network device may be a distributed unit.

In embodiments, the first network device may be a distributed unit, and the second network device may be a scheduler of the distributed unit.

In embodiments, the apparatus may be configured to: transmit the feedback via a fronthaul congestion detection message.

In embodiments, the fronthaul congestion detection message is at least one of the following:

- an enhanced common public radio interface, eCPRI, control plane message,

- an eCPRI management plane message,
- an eCPRI message type 5, or
- an eCPRI user plane message.

In a second aspect, disclosed is an apparatus for a scheduler. The apparatus may include at least one processor and at least one memory. The at least one memory may store instructions that, when executed by the at least one processor, may cause the apparatus at least to: monitor a feedback notifying a status of congestion in fronthaul; and perform at least one of the following: adjusting link adaptation, or adjusting radio resource allocations with a radio resource limit which restricts an amount of radio resources available per a time interval for a given cell or a group of cells.

In embodiments, the apparatus may be configured to: if the feedback notifies the congestion, perform at least one of the following: adjust the link adaptation based on a correlation between an increase of hybrid automatic repeat request non-acknowledgment, HARQ NACK and the congestion, or adjust the radio resource allocations by reducing the radio resource limit by a step.

In embodiments, the apparatus may be configured to: if the feedback notifies the congestion, adjust the radio resource allocations by delaying a part of the radio resource allocations to a later time.

In embodiments, the apparatus may be configured to: if the feedback notifies the congestion is relieved, perform at least one of the following: adjust the link adaptation to fall back to the algorithm used prior to monitoring the feedback notifying the congestion, or adjust the radio resource allocations by increasing the radio resource limit by a step.

In embodiments, the apparatus may be configured to: determine the step based on, for the given cell or the group of cells, an estimated radio resource demand and a current value of the radio resource limit.

In embodiments, the apparatus may be configured to: if the feedback comprises a level of the congestion, determine the step based on an estimated radio resource demand, a current value of the radio resource limit and the level of the congestion.

In embodiments, the apparatus may be configured to: if the feedback notifies the congestion, until the feedback notifies the congestion is relieved, reduce the radio resource limit by the step through: reducing a number of available spatial resources, until the number of the spatial resources reaches a minimum number, and reducing a number of available frequency resources.

In embodiments, the apparatus may be configured to: if the feedback notifies the congestion is relieved, until the feedback notifies the congestion, increase the radio resource limit by the step through: increasing a number of available frequency resources, until the full bandwidth of the given cell or the group of cells is reached, and increasing a number of available spatial resources.

In embodiments, the spatial resources may comprise at least one of the following: spatial streams, or multiple-input multiple-output, MIMO, layers.

In embodiments, the radio resource limit may be above or equal to a pre-defined minimum value.

In embodiments, the apparatus may be configured to: predict an enhanced common public radio interface, eCPRI, traffic pattern in the fronthaul based on previous congestions and previous adjustments of the radio resource allocations; and perform a proactive adjustment of the radio resource allocations based on the predicted eCPRI traffic pattern.

In embodiments, the scheduler may be a medium access control scheduler of a distributed unit.

In a third aspect, disclosed is a method performed by an apparatus for a first network device. The method may comprise: detecting whether congestion occurs in fronthaul; and transmitting to a second network device, a feedback for notifying the congestion if detecting the congestion in the fronthaul.

In embodiments, the method may comprise: determining a level of the congestion if detecting the congestion, wherein the feedback notifies the level of the congestion.

In embodiments, the method may comprise: monitoring a counter for counting abnormal arriving messages.

In embodiments, the method may comprise: comparing expected arriving messages and correctly received messages.

In embodiments, the method may comprise: detecting the congestion based on at least one of the following: the counter or the comparison.

In embodiments, the method may comprise: determining the level of the congestion based on at least one of the following: the counter or the comparison.

In embodiments, the counter may count messages, sequence number errors of which indicate losses of the messages.

In embodiments, the counter may count messages which arrive later than a receive window.

In embodiments, the first network device may be a radio unit, and the second network device may be a distributed unit.

In embodiments, the first network device may be a distributed unit, and the second network device may be a scheduler of the distributed unit.

In embodiments, the method may comprise: transmitting the feedback via a fronthaul congestion detection message.

In embodiments, the fronthaul congestion detection message is at least one of the following:

- an enhanced common public radio interface, eCPRI, control plane message,
- an eCPRI management plane message,
- an eCPRI message type 5, or
- an eCPRI user plane message.

In a fourth aspect, disclosed is a method performed by an apparatus for a scheduler. The method may comprise: monitoring a feedback notifying a status of congestion in fronthaul; and performing at least one of the following: adjusting link adaptation, or adjusting radio resource allocations with a radio resource limit which restricts an amount of radio resources available per a time interval for a given cell or a group of cells.

In embodiments, the method may comprise: if the feedback notifies the congestion, performing at least one of the following: adjusting the link adaptation based on a correlation between an increase of hybrid automatic repeat request non-acknowledgment, HARQ NACK and the congestion; or adjusting the radio resource allocations by reducing the radio resource limit by a step.

In embodiments, the method may comprise: if the feedback notifies the congestion, adjusting the radio resource allocations by delaying a part of the radio resource allocations to a later time.

In embodiments, the method may comprise: if the feedback notifies the congestion is relieved, performing at least one of the following: adjusting the link adaptation to fall back to the algorithm used prior to monitoring the feedback notifying the congestion; or adjusting the radio resource allocations by increasing the radio resource limit by a step.

In embodiments, the method may comprise: determining the step based on, for the given cell or the group of cells, an estimated radio resource demand and a current value of the radio resource limit.

In embodiments, the method may comprise: if the feedback comprises a level of the congestion, determining the step based on an estimated radio resource demand, a current value of the radio resource limit and the level of the congestion.

In embodiments, the method may comprise: if the feedback notifies the congestion, until the feedback notifies the congestion is relieved, reducing the radio resource limit by the step through: reducing a number of available spatial resources, until the number of the spatial resources reaches a minimum number; and reducing a number of available frequency resources.

In embodiments, the method may comprise: if the feedback notifies the congestion is relieved, until the feedback notifies the congestion, increasing the radio resource limit by the step through: increasing a number of available frequency resources, until the full bandwidth of the given cell or the group of cells is reached; and increasing a number of available spatial resources.

In embodiments, the spatial resources may comprise at least one of the following: spatial streams, or multiple-input multiple-output, MIMO, layers.

In embodiments, the radio resource limit may be above or equal to a pre-defined minimum value.

In embodiments, the method may comprise: predicting an enhanced common public radio interface, eCPRI, traffic pattern in the fronthaul based on previous congestions and previous adjustments of the radio resource allocations; and performing a proactive adjustment of the radio resource allocations based on the predicted eCPRI traffic pattern.

In embodiments, the scheduler may be a medium access control scheduler of a distributed unit.

In a fifth aspect, disclosed is an apparatus for a first network device. The apparatus for the terminal device may comprise: means for detecting whether congestion occurs in fronthaul; and means for transmitting to a second network device, a feedback for notifying the congestion if detecting the congestion in the fronthaul.

The apparatus for a first network device may comprise means for performing the steps of the method according to the third aspect according to any embodiment of this method.

In a sixth aspect, disclosed is an apparatus for a scheduler. The apparatus for the network device may comprise: means for monitoring a feedback notifying a status of congestion in fronthaul; and means for performing at least one of the following: adjusting link adaptation, or adjusting radio resource allocations with a radio resource limit which restricts an amount of radio resources available per a time interval for a given cell or a group of cells.

The apparatus for the scheduler may comprise means for performing the steps of the method of according to the fourth aspect according to any embodiment of this method.

In a seventh aspect, a computer readable medium is disclosed. The computer readable medium may comprise program instructions that, when executed by an apparatus for a first network device, may cause the apparatus at least to: detect whether congestion occurs in fronthaul; and transmit to a second network device, a feedback for notifying the congestion if detecting the congestion in the fronthaul.

The computer readable medium may comprises program instructions that, when executed by an apparatus for a first network device, cause the apparatus to at least perform the steps of the method according to the third aspect according to any embodiment of this method.

In an eighth aspect, a computer readable medium is disclosed. The computer readable medium may comprise program instructions that, when executed by an apparatus for a scheduler, cause the apparatus at least to: monitor a feedback notifying a status of congestion in fronthaul; and perform at least one of the following: adjusting link adaptation, or adjusting radio resource allocations with a radio resource limit which restricts an amount of radio resources available per a time interval for a given cell or a group of cells.

The computer readable medium may comprise program instructions that, when executed by an apparatus for a scheduler, cause the apparatus to at least perform the steps of a method according to the fourth aspect according to any embodiment of this method.

Other features and advantages of the example embodiments of the present disclosure will also be apparent from the following description of specific embodiments when read in conjunction with the accompanying drawings, which illustrate, by way of example, the principles of example embodiments of the present disclosure.

BRIEF DESCRIPTION OF THE DRAWINGS

Some example embodiments will now be described, by way of non-limiting examples, with reference to the accompanying drawings.

FIG. 1 shows an exemplary connectivity diagram for a feedback notifying a status of congestion in fronthaul according to the example embodiments of the present disclosure.
FIG. 2 shows an example adjustment of link adaption according to the example embodiments of the present disclosure.
FIG. 3A shows an example of radio resource allocations without adjustment according to the example embodiments of the present disclosure.
FIG. 3B shows an example of radio resource allocations with adjustment according to the example embodiments of the present disclosure.
FIG. 4 shows an exemplary congestion handling states according to the example embodiments of the present disclosure.
FIG. 5 shows an exemplary congestion handling flow according to the example embodiments of the present disclosure.
FIG. 6 shows a flow chart illustrating an example method 600 for fronthaul according to the example embodiments of the present disclosure.
FIG. 7 shows a flow chart illustrating an example method 700 for fronthaul according to the example embodiments of the present disclosure.
FIG. 8 shows a block diagram illustrating an example device 800 for fronthaul according to the example embodiments of the present disclosure.
FIG. 9 shows a block diagram illustrating an example device 900 for fronthaul according to the example embodiments of the present disclosure.
FIG. 10 shows a block diagram illustrating an example apparatus 1000 for fronthaul according to the example embodiments of the present disclosure.
FIG. 11 shows a block diagram illustrating an example apparatus 1100 for fronthaul according to the example embodiments of the present disclosure.

Throughout the drawings, same or similar reference numbers indicate same or similar elements. A repetitive description on the same elements would be omitted.

DETAILED DESCRIPTION

Herein below, some example embodiments are described in detail with reference to the accompanying drawings. The following description includes specific details for the purpose of providing a thorough understanding of various concepts. However, it will be apparent to those skilled in the art that these concepts may be practiced without these specific details. In some instances, well known circuits, techniques and components are shown in block diagram form to avoid obscuring the described concepts and features.

eCPRI traffic pattern generated by a cell depends on radio MAC scheduler decisions on radio resource allocation per a time interval. In, for example, eCPRI 7-2x user plane (U-Plane), traffic rate generated by a cell is proportional to the number of stream-physical resource blocks (stream-PRBs), which may be for example PRBs per stream x number of spatial streams, for RU Category A or layer-PRBs for RU Category B allocated per symbol. Normally, a radio MAC scheduler tries to use all available radio resources e.g. all spatial streams/multiple-input multiple-output (MIMO) layers and PRBs to serve user equipment (UE) offered traffic as soon as possible, to minimize end-to-end user data delay. This scheduler behavior for low/medium loaded cell results in high variability of the radio resource allocations per slot, where some slots have full allocation while other slots have very low or zero allocation. Moreover, there could be some correlations of the radio resource allocations between cells, e.g. for time division duplex (TDD) mode where multiple cells use the same slot pattern that is synchronized in time.

Typically, average eCPRI traffic rate per cell is low, but the traffic may be very bursty. Such highly variable and correlated between cells eCPRI traffic pattern does not allow aggressive fronthaul overbooking. If the eCPRI traffic would be shaped to become less variable in time, then more aggressive fronthaul overbooking should be possible without eCPRI packet losses. However, shaping of the eCPRI traffic at DU/RU layer 1 (L1) or transport level is not possible due to stringent eCPRI delay/packet delay variation (PDV) requirements.

Example embodiments of the present disclosure provide a solution for fronthaul. According to the example embodiments of the present disclosure, a scheduler may get adequate and accurate information about the load in the fronthaul in order for the scheduler to act efficiently in case of fronthaul congestion, and the scheduler does not reduce user throughput needlessly but still relieves congestion in the fronthaul.

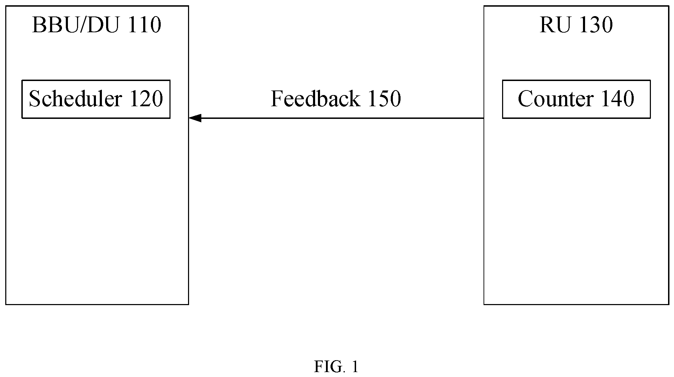

FIG. 1 shows an exemplary connectivity diagram for a feedback notifying a status of congestion in fronthaul according to the example embodiments of the present disclosure. Referring to the FIG. 1, a RU 130 and a BBU/DU 110, which will be collectively referred to as DU 110, communicate in a fronthaul network. There is a counter 140 in the RU 130, and various counters may apply as the counter 140. The DU 110 includes a scheduler 120, which may be for example a MAC scheduler, and the scheduler 120 may control eCPRI traffic pattern by changing allocation of radio resources. The counter 140 and the scheduler 120 will be described in detail later.

In some embodiments, the RU 130 may detect whether congestion occurs in fronthaul. In some embodiments, the RU 130 may detect the status of the congestion in downlink direction periodically, e.g. every time interval, e.g. 100 ms and transmit to the DU 110 a feedback 150 notifying the status of the congestion in the fronthaul. If the RU 130 detects the congestion occurs in the fronthaul, the RU 130 may transmit to the DU 110 the feedback 150 notifying the congestion.

In some embodiments, the counter 140 may count abnormal arriving messages, and by monitoring the counter 140, the RU 130 may detect the congestion. For example, the downlink message in the fronthaul may be eCPRI U-Plane message, which may include an eCPRI transport header defined according to open radio access network (O-RAN) Working Group 4 (Open Fronthaul Interfaces WG) Control, User and Synchronization Plane Specification (CUS), e.g. O-RAN.WG4.CUS.0. A sequence number of the message may be coded in the field "epriSeqid" of the eCPRI transport header.

In some embodiments, abnormal arriving messages may be messages with sequence number errors, and a counter, e.g. the RX_SEQID_ERR defined according to O-RAN.WG4.CUS.0 may be used as the counter 140 to count messages with sequence number errors, and the sequence number errors may indicate losses of the message. For example, assuming that the RU 130 has received a message with sequence number 100, the next message should have sequence number 101, and if the RU 130 receives a message with sequence number 102 or higher after receiving the message with sequence number 100, the message with sequence number 101 is assumed to be lost, which may be denoted as out-of-order message and counted by the counter 140.

In some embodiments, abnormal arriving messages may be messages which arrive later than a receive window, and a counter, e.g. the RX_LATE defined according to O-RAN.WG4.CUS.0 may be used as the counter 140 to count the messages arriving later than the receive window, which may indicate the congestion in fronthaul. The messages arriving later than the receive window may be expected to be dropped by eCPRI endpoint in the RU 130.

In some cases, a message arriving out-of-order may still fit the receive window, and this message may be processed and cause a false positive detection. In some embodiments, the counter 140 may count the abnormal arriving messages which cannot be corrected, i.e. excluding the false positive detection. However, false positive detection is not a major problem. Out-of-order transmission is mainly caused by protection switching and re-routing, both of which take place mainly in failure cases. So for majority of cases, the out-of-order messages counted are the result of congestion. Due to this, the counter 140 counting messages with sequence number errors can provide accurate enough information of congestion without correcting the false positive detection cases. The result of false positive detection is not fatal but simply causes some lost throughput as transmission rates are temporarily reduced.

In some embodiments, in case the RU 130 monitors that the counter 140 counts an abnormal arriving message, the RU 130 may detect the congestion in the fronthaul.

The counter 140 can be monitored either by the control central processing unit (CPU), in which case the process may be relatively slower, e.g. in the order of 100s of milliseconds, alternatively the monitoring can be implemented into hardware for faster reaction.

Alternatively or additionally, in some embodiments, the RU 130 may compare expected arriving messages and correctly received messages. For example, the RU 130 may compare the expected amount of PRBs, e.g. scheduled via eCPRI control plane (C-Plane), and correctly received PRBs per time interval, e.g. per slot or symbol.

In some embodiments, in case the correctly received messages are less than the expected arriving messages, the RU 130 may detect the congestion in the fronthaul. In some embodiments, in case the correctly received messages are less than the expected arriving messages to certain extent, the RU 130 may detect the congestion in the fronthaul.

In some embodiments, the RU 130 may determine a level of the congestion if detecting the congestion, and in this case the feedback 150 may further include the level of the congestion.

In some embodiments, the RU 130 may determine the level of the congestion based on the counter 140. The counter may detect the gaps in messages which may indicate the size of loss, and thus the RU 130 may be aware the level of the message losses.

In some embodiments, in case the RU 130 may further use the counter RX_TOTAL defined according to O-RAN.WG4.CUS.0 as the counter 140, with the RX_SEQID_ERR and/or the RX_LATE together, the RU 130 may estimate the level of the congestion in the fronthaul.

Alternatively or additionally, in some embodiments, the RU 130 may determine the level of the congestion based on the comparison between the expected arriving messages and the correctly received messages.

In some embodiments, the level may quantitatively indicate the congestion, for example, a percentage of lost messages, e.g. lost packets. In some embodiments, the level may qualitatively indicate the congestion, for example, low, medium or severe congestion.

In some embodiments, the RU 130 may transmit to the DU 110 the feedback 150 via a fronthaul congestion detection message. The fronthaul congestion detection message may be at least one of the following: an eCPRI C-Plane message, an eCPRI management plane (M-Plane) message, an eCPRI message type 5, or an eCPRI U-Plane message.

The eCPRI message type 5 may be an extended format of message type 5. The eCPRI defines a request-response pattern for the message type 5, so the DU 110 may request the status of the congestion in the fronthaul e.g. around every 50 ms, and the RU 130 may transmit the feedback 150 via the eCPRI message type 5.

Alternatively, the RU 130 may use one reserved bit in transport header of the eCPRI U-Plane message in in-phase and quadrature (IQ) data frame to indicate the status of the congestion in fronthaul, e.g. 1 indicates the congestion and 0 indicates no congestion. In this case, the feedback 150 may be divided in two parts and transmitted separately. The scheduler 120 at the DU 110 can get early/faster feedback before receiving more detail information e.g. the level via the eCPRI C-Plane message or the eCPRI message type 5.

Receiving the feedback 150, the DU 110 may send the feedback 150 to the scheduler 120 at the DU 110.

In the above example embodiments, the RU 130 detects the status of the congestion in downlink direction and transmit to the DU 110 the feedback 150 notifying the status of the congestion in the fronthaul. In some embodiments, the DU 110 may detect the status of the congestion in uplink direction, for example, based on a counter of the DU 110 similar to the counter 140 and/or the comparison between the expected arriving messages and the correctly received messages at the DU 110. In this case, the DU 110 may detect whether the congestion occurs in the fronthaul in uplink direction and transmit to the scheduler 120, the feedback 150 for notifying the status of the congestion, but the fronthaul congestion detection message from the RU 130 to the DU 110 is not needed.

The scheduler 120 can control eCPRI traffic pattern generated by a cell or a group of cells by changing allocation of radio resources in both time (across slots and symbols), and frequency and also in spatial dimension e.g. MIMO layers/spatial streams. In some embodiments, the scheduler 120 may monitor the feedback 150 notifying the status of the congestion in the fronthaul and perform congestion handling accordingly.

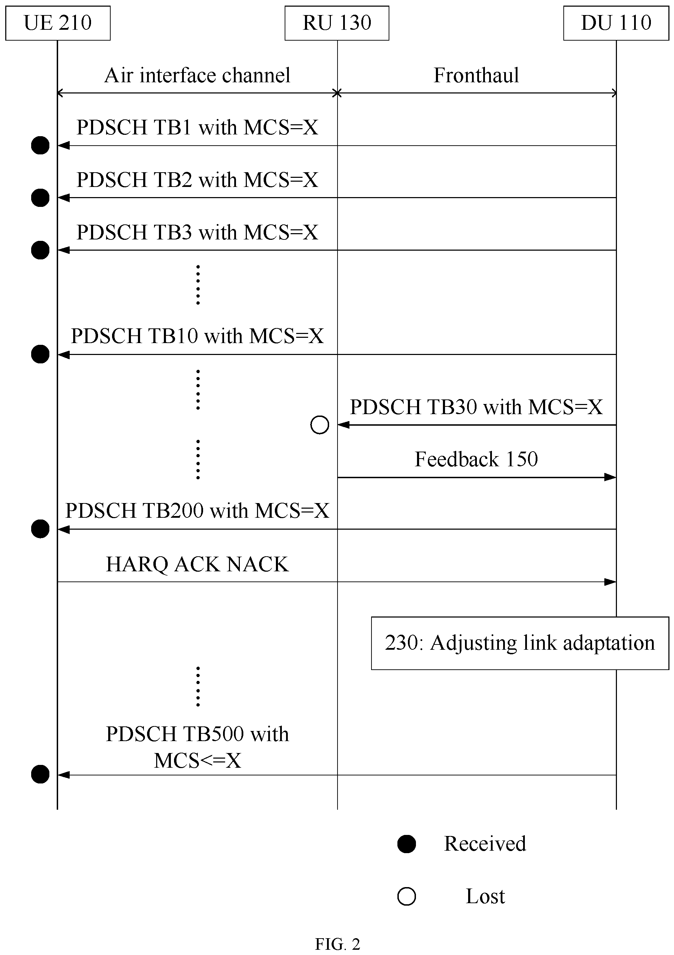

FIG. 2 shows an example adjustment of link adaption according to the example embodiments of the present disclosure.

Link adaptation comprises outer-loop link adaptation (OLLA) and inner-loop link adaptation (ILLA). In mobile networks, link adaptation may rely on channel quality indicator (CQI), rank indication (RI), precoding matrix indicator (PMI) and/or HARQ-feedback to assess the quality of channel and adapt the transmission scheme. When the channel is estimated, link adaptation algorithm decides exact transmission parameters such as modulation order, code rate, etc. for the observed channel. Link adaptation is designed to reliably achieve the optimal bitrate possible in the observed channel. If any metric suggests bad channel conditions, the link adaptation algorithm may modify the transmission scheme to reliably support lower bitrate, which mean lowering the coding rate and reducing modulation order. For example, if a link adaptation algorithm observes increase in HARQ non-acknowledgment e.g. increase in block error rate (BLER) or residual BLER, it tries to reduce the coding rate and/or modulation scheme.

Referring to the FIG. 2, a UE 210 may represent any terminal device served by the DU 110. The interface between the UE 210 and the RU 130 is air interface channel, and the network between the RU 130 and the DU 110 is fronthaul.

Assuming that the DU 110 transmits to the UE 210, physical downlink shared channel (PDSCH) transport block (TB) 1, 2, ..., 500, and initially the modulation and coding scheme (MCS) = X. During the transmission, some TB, e.g. TB30 is lost over the fronthaul. In addition to HACK acknowledge (ACK) and non-acknowledge (NACK) reported by the UE 210, the scheduler 120 also monitors the feedback 150 notifying the status of the congestion in the fronthaul.

In an operation 230, the scheduler 120 may adjust the link adaptation. If the feedback 150 notifies the congestion, the scheduler 120 may adjust the link adaptation based on a correlation between an increase of HARQ NACK and the congestion. With the feedback 150, the scheduler 120 may be aware the actual reason for the increase of HARQ NACK, e.g. due to the congestion in the fronthaul or due to the air interface.

Alternatively or additionally, the scheduler 120 may adjust the link adaptation based on a correlation between an increase of BLER and the congestion. With the feedback 150, the scheduler 120 may be aware the actual reason for the increase of the BLER, e.g. due to the congestion in the fronthaul or due to the air interface.

Thus in the link adaptation to decide the transmission parameters such as the MCS, because the scheduler 120 may be aware the actual reason for the increase of the HARQ NACK/BLER, in some embodiments, the scheduler 120 may perform the link adaptation without considering the HARQ NACK/BLER, or alternatively in some embodiments, the scheduler 120 may perform the link adaptation considering the HARQ NACK/BLER with a slight weight. For example, the scheduler 120 may decide not to reduce the MCS to a value < X, if the scheduler 120 observes that the actual reason for the increase of HARQ NACK/BLER is due to congestion in the fronthaul.

Hence, according to the example embodiments of the present disclosure, the link adaptation algorithm can be improved to differentiate between the actual channel problem and the congestion in fronthaul transmission and avoid unnecessary action which result in reduction of spectral efficiency.

If the feedback 150 notifies the congestion is relieved, the scheduler 120 may adjust the link adaptation to fall back to the algorithm used prior to monitoring the feedback notifying the congestion. For example, in the link adaptation, the scheduler 120 may take the HARQ NACK/BLER into account.

Alternatively or additionally, in some embodiments, the scheduler 120 may monitor the feedback 150 notifying the status of the congestion in the fronthaul and adjust radio resource allocations with a radio resource limit which restricts an amount of radio resources available per a time interval for a given cell or a group of cells. In some embodiments, the time interval is a slot or a symbol. In some embodiments, the group of cells are served by the DU 110, and the radio resources for the group of cells may be controlled by the scheduler 120.

The scheduler 120 may be a MAC scheduler in layer 2 (L2) of the radio access network (RAN) protocol stack. In some embodiments, the scheduler 120 may perform adaptive adjustment of radio resource allocations to implicitly control the eCPRI traffic pattern and improve the eCPRI statistical multiplexing gain, i.e. maximize fronthaul overbooking ratio. The scheduler 120 may adapt radio resource allocation dynamically to maximize the spectral efficiency and/or cell throughput based on status of congestion and user demand.

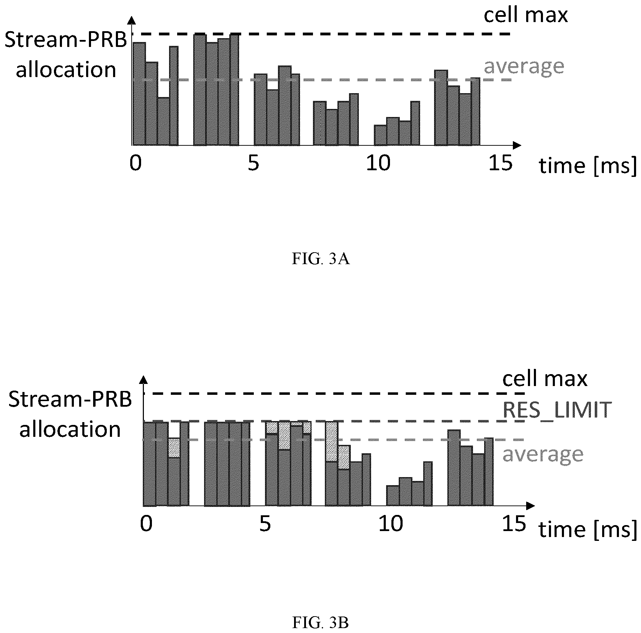

FIG. 3A shows an example of radio resource allocations without adjustment according to the example embodiments of the present disclosure. Referring to the FIG. 3A, "cell max" refers to the maximum value of radio resources according to capacity of the given cell or the group of cells, and "average" refers to the average requirement of radio resources for the given cell or the group of cells.

FIG. 3B shows an example of radio resource allocations with adjustment according to the example embodiments of the present disclosure. Referring to the FIG. 3B, "RES_LIMIT" refers to the radio resource limit. If the feedback 150 notifies the congestion, the scheduler 120 may adjust the radio resource allocations by delaying a part of the radio resource allocations to a later time. In some embodiments, the scheduler 120 may delay the radio resource allocations when the RES_LIMIT is below the cell max and above radio resource demand. The radio resource demand may still be satisfied but within longer time than normally.

In some embodiments, there may be no strict radio resource limit implemented by the scheduler 120, but the scheduler 120 may delay the handling of UE offered traffic upon congestion.

As shown in the FIG. 3B, the scheduler 120 adjusts the radio resource allocations in time, to ensure that the allocated radio resources not exceed the RES_LIMIT. The RES_LIMIT indicates the amount of available radio resources e.g. stream-PRBs or layer-PRBs that can be allocated by the scheduler 120 per time interval e.g. slot for the given cell or the group of cells. The adjustment delays some allocations of the radio resources to a later time, which results in buffering of UE data in radio L2 e.g. radio link control (RLC) or higher layers, and consequently increase of end-to-end user data latency/PDV. In some embodiments, the scheduler 120 applies the RES_LIMIT in case of the fronthaul congestion or for avoiding the fronthaul congestion, and gradually change the RES_LIMIT to minimize impact on radio access network (RAN) key performance indicators (KPIs).

In some embodiments, the scheduler 120 adjusts the RES__LIMIT based on the fronthaul congestion status and periodically re-evaluate the RES_LIMIT based on front haul monitoring result, e.g. the feedback 150. In some embodiments, the radio resource limit is above or equal to a pre-defined minimum value. The pre-defined minimum value may be denoted as RES_LIMIT_MIN. The RES_LIMIT cannot go below the RES_LIMIT_MIN, to ensure that cell(s) with low UE offered traffic or highly variable load would not be starved.

In some embodiments, if the feedback 150 notifies the congestion, the scheduler 120 may adjust the radio resource allocations by reducing the radio resource limit by a step. In some embodiments, if the feedback 150 notifies the congestion is relieved, the scheduler 120 may adjust the radio resource allocations by increasing the radio resource limit by a step.

In some embodiments, the scheduler 120 may determine the step based on, for the given cell or the group of cells, an estimated radio resource demand and a current value of the radio resource limit. In some embodiments, the scheduler 120 periodically updates the RES_LIMIT based on the feedback 150, with configurable update period T e.g. every 50ms. At the beginning of a time interval $T_i$, the RES_LIMIT may be updated based on the congestion status during a previous time interval $T_{i-1}$, and then the radio resource allocations may be performed according to the RES_LIMIT till the end of $T_i$. Then, new time interval $T_{i+1}$ starts, and the process is repeated.

In some embodiments, the scheduler 120 may determine the step, denoted as $STEP_i$, by calculating maximum allowed reduction or increase step, denoted as $STEP_{i,MAX}$, based on the current estimation of radio resource demand.

$$STEP_{i,MAX} = f(RES\_LIMIT_{i-1},\ RES\_DEMAND_i)$$

where i and i - 1 represent the time intervals, $RES\_DEMAND_i$ represents the estimated radio resource demand in time interval $T_i$, and f() can be linear or non-linear function.

For example, f() may be a function of difference between the RES_LIMIT and the estimated radio resource demand. The scheduler 120 may use the $STEP_{i,MAX}$ as $STEP_i$.

In some embodiments, if the feedback 150 comprises the level of the congestion, the scheduler 120 may determine the step based on the estimated radio resource demand, the current value of the radio resource limit and the level of the congestion.

In some embodiments, the scheduler 120 may further determine RES_LIMIT reduction step proportionally to the congestion level to enable faster recovery, for example, using bigger steps for severe congestion.

In some embodiments, the scheduler 120 may further calculate the RES_LIMIT reduction step proportionally to the congestion level, which is denoted as $STEP_{i,PROP}$.

$$STEP_{i,PROP} = RES\_LIMIT_{i-1} \times CONG\_WEIGHT_i$$

where $CONG\_WEIGHT_i$ represents the level of the congestion.

Then, the scheduler 120 may select the minimum between the $STEP_{i,PROP}$ and the $STEP_{i,MAX}$ as $STEP_i$.

$$STEP_i = MIN(STEP_{i,PROP},\ STEP_{i,MAX})$$

In some embodiments, the scheduler 120 may adjusting radio resource allocations by the following two types of operations to handle fronthaul congestion or prevent fronthaul congestion.

Operation type 1: Shaping of radio resource allocations to reduce spikes of eCPRI traffic.

In this case UE offered traffic is still served by a cell, but the UE offered data needs to be temporarily buffered in radio L2 e.g. RLC or higher layers, to eliminate spikes in the radio resource allocations and the eCPRI traffic. The shaping may be achieved by gradually reducing the RES_LIMIT when the estimated radio resource demand is significantly below the current value of the RES_LIMIT.

Operation type 2: Throttling of radio resource allocations to reduce eCPRI traffic rate.

If uniform distribution of radio resource allocations across consecutive time intervals does not provide enough reduction of eCPRI traffic to recover from the FH congestion, then the scheduler 120 can further reduce the RES_LIMIT which will result in temporary decrease of average cell throughput until the fronthaul congestion is relieved. The throttling may results in build-up of buffers on L2 or higher layers, so the scheduler 120 may only temporarily perform the throttling.

In some embodiments, the scheduler 120 may distinguish between the shaping and the throttling by comparing the current RES_LIMIT with the estimated radio resource demand. When the RES_LIMIT is above or equal to the radio resource demand, the scheduler 120 may perform the shaping, otherwise the scheduler 120 may perform the throttling. The scheduler 120 may estimate the radio resource demand per cell or per group of cells based on the current L2 buffer status, average UE data arrival rate and average UE spectral efficiency calculated from historical data. Alternatively, the scheduler 120 may estimate the radio resource demand based on the radio resource usage in the previous time intervals, averaged over a short sliding window e.g. 5 sec. As UE offered traffic varies in time, the scheduler 120 may estimate the radio resource demand periodically.

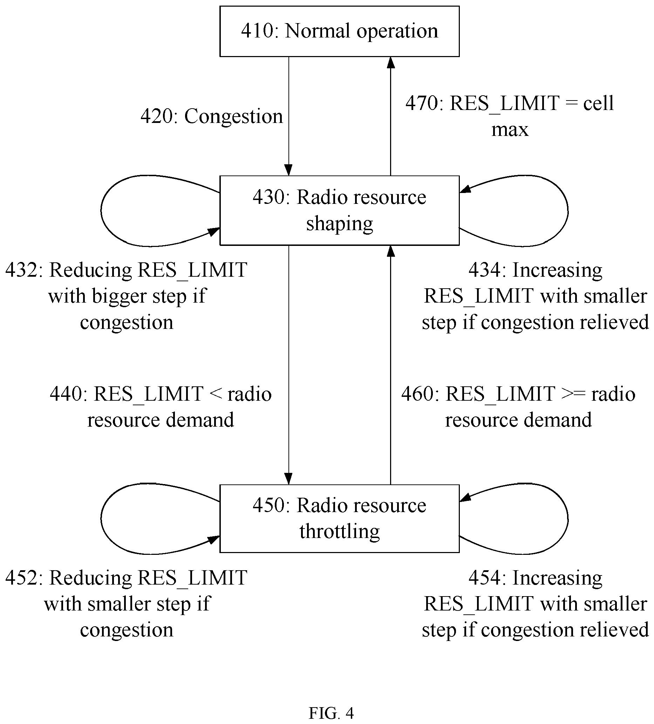

FIG. 4 shows an exemplary congestion handling states according to the example embodiments of the present disclosure.

Referring to the FIG. 4, in an operation 410, the scheduler 120 performs normal operation, where the RES_LIMIT = cell max. If in an operation 420, the scheduler 120 monitors the feedback 150 notifying congestion in fronthaul, in an operation 430, the scheduler 120 may perform radio resource shaping. In some embodiments, because shaping has significantly lower negative impact on system KPIs than throttling, so shaping is an action prior to throttling for fronthaul congestion handling/avoidance.

In some embodiments, during the shaping, if the fronthaul is in the congestion state, in an operation 432, the scheduler 120 may reduce the RES_LIMIT with bigger step in order to faster recover the fronthaul. If in an operation 440, the RES_LIMIT is reduced lower than the radio resource demand, then in an operation 450, the scheduler 120 may perform radio resource throttling. In some embodiments, during the throttling, if the fronthaul is still in the congestion state, in an operation 452, the scheduler 120 may reduce the RES_LIMIT with smaller step.

During the throttling, if the scheduler 120 monitors the feedback 150 notifying the congestion in fronthaul is relieved, in an operation 454, the scheduler 120 may increase the RES_LIMIT with smaller step. If in an operation 460, the RES_LIMIT is increased above than or equal to the radio resource demand, the scheduler 120 performs the shaping instead of the throttling. Then, in an operation 434, if the fronthaul is still in the congestion relieved state, the scheduler 120 may continue to increase the RES_LIMIT with smaller step. If in an operation 470, the RES_LIMIT is increased to the cell max, the scheduler 120 may fall back to perform normal operation.

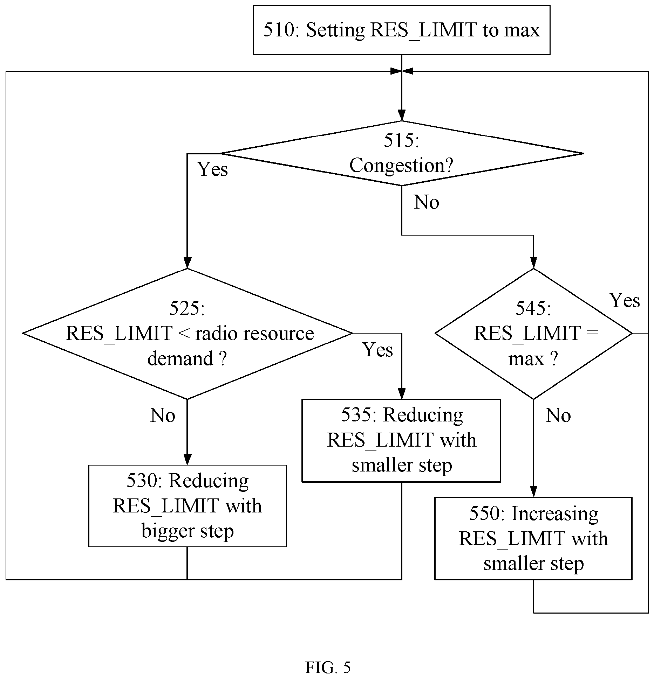

FIG. 5 shows an exemplary congestion handling flow according to the example embodiments of the present disclosure.

Initially, in an operation 510, the scheduler 120 may set the RES_LIMIT to the cell max. If in an operation 515, the scheduler 120 monitors the feedback 150 notifying congestion in fronthaul ("Yes" prong of the operation 515), in an operation 525, the scheduler 120 may distinguish between the radio resource shaping and the radio resource throttling by comparing the RES_LIMIT with the radio resource demand. If in the operation 525, the RES_LIMIT is not lower than the radio resource demand ("No" prong of the operation 525), in an operation 530, the scheduler 120 may perform the radio resource shaping by reducing the RES_LIMIT with bigger step.

Back to the operation 515, if the scheduler 120 monitors the feedback 150 still notifying congestion in fronthaul ("Yes" prong of the operation 515), and in the operation 525, the RES_LIMIT is reduced lower than the radio resource demand ("Yes" prong of the operation 525), in an operation 535, the scheduler 120 may perform the radio resource throttling by reducing the RES_LIMIT with smaller step.

Back to the operation 515, if the scheduler 120 monitors the feedback 150 notifying congestion in fronthaul is relieved ("No" prong of the operation 515), if in an operation 545 the scheduler 120 determines the RES_LIMIT is lower than the cell max ("No" prong of the operation 545), in an operation 550, the scheduler 120 may increase the RES_LIMIT with smaller step until in the operation 545 the RES_LIMIT is increased to the cell max.

The operations in the FIG. 5 after initially setting the RES_LIMIT to the cell max are periodically performed. The scheduler 120 periodically monitors the feedback 150 which notifies the status of the congestion in the fronthaul. By monitoring the feedback 150 every time interval, the scheduler 120 may observe the impact of previous changing of the RES_LIMIT on the status of the congestion in the fronthaul.

In some embodiments, if the feedback 150 notifies the congestion, until the feedback 150 notifies the congestion is relieved, the scheduler 120 may reduce the radio resource limit by the step through reducing a number of available spatial resources, until the number of the spatial resources reaches a minimum number, and reducing a number of available frequency resources.

In some embodiments, if the feedback 150 notifies the congestion is relieved, until the feedback 150 notifies the congestion, the scheduler 120 may increase the radio resource limit by the step through increasing a number of available frequency resources, until the full bandwidth of the given cell or the group of cells is reached, and increasing a number of available spatial resources.

In some embodiments, the spatial resources may comprises at least one of the following: spatial streams, or MIMO layers, and the frequency resource may be, for example, PRBs.

The frequency resources and the spatial resources are relevant for eCPRI traffic pattern. Because UEs scheduled in single-user (SU)-MIMO mode usually have better spectral efficiency than when scheduled in multi-user (MU)-MIMO mode, i.e. paired with other UEs, in reducing the RES_LIMIT, by gradually reducing MU-MIMO pairing capabilities before reducing the number of PRBs, and in increasing the RES_LIMIT, by gradually increasing the number of PRBs before increasing MU-MIMO pairing capabilities, the same amount of radio resources e.g. stream-PRBs/layer-PRBs will be able to serve more user traffic.

In some embodiments, the scheduler 120 may predict the eCPRI traffic pattern in the fronthaul based on previous congestions and previous adjustments of the radio resource allocations and perform a proactive adjustment of the radio resource allocations based on the predicted eCPRI traffic pattern. Congestion handling can use historical information on previous fronthaul congestion events and previous congestion handling actions, for example, reductions of the RES_LIMIT, to stabilize the algorithm and avoid oscillation of the fronthaul traffic rate e.g. periodical congestions.

In a system there are multiple schedulers like the scheduler 120 working in parallel for cells sharing the fronthaul link, according to the example embodiments of the present disclosure, it does not require coordination among the multiple schedulers, which would be beneficial due to timing restrictions.

According to the example embodiments of the present disclosure, for cells sharing the fronthaul link, multiple schedulers like the scheduler 120 " equally participate" in the congestion resolution and independently make congestion resolution decisions. For example, the multiple schedulers have similar level of KPI degradation due to congestion handling by appropriate selection of the RES_LIMIT steps, therefore fairness between the cells sharing fronthaul link can be ensured, and none of the cells would be starved, i.e. none of cells is significantly degraded while others are working normally. Thus the overall congestion in the shared fronthaul link can be resolved.

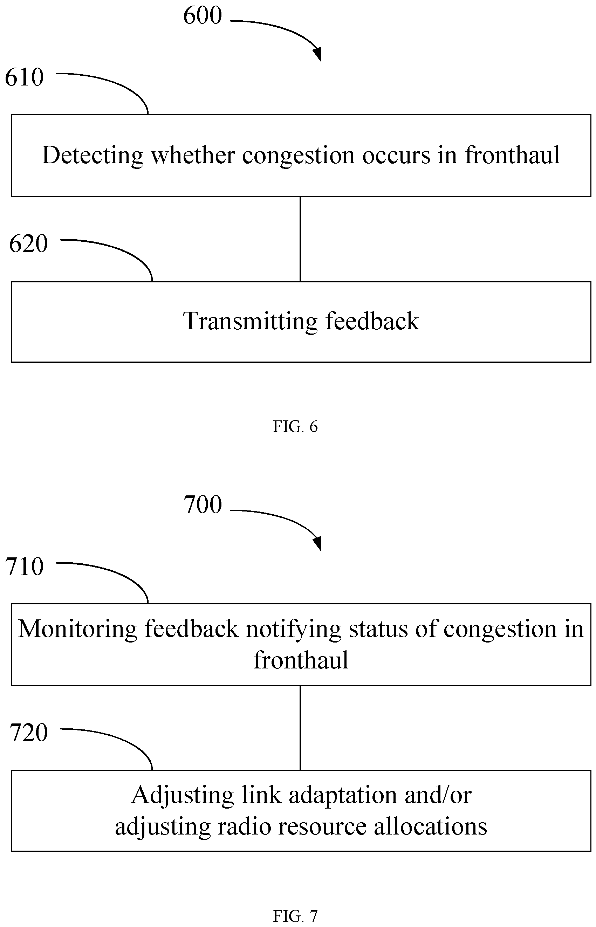

FIG. 6 shows a flow chart illustrating an example method 600 for fronthaul according to the example embodiments of the present disclosure. The example method 600 may be performed for example by an apparatus for a first network device such as the DU 110 or the RU 130 above mentioned.

Referring to the FIG. 6, the example method 600 may comprise: an operation 610 of detecting whether congestion occurs in fronthaul; and an operation 620 of transmitting to a second network device, a feedback for notifying the congestion if detecting the congestion in the fronthaul.

In some embodiments, the example method 600 may comprise: determining a level of the congestion if detecting the congestion, wherein the feedback may notify the level of the congestion.

In some embodiments, the example method 600 may comprise: monitoring a counter for counting abnormal arriving messages.

In some embodiments, the example method 600 may comprise: comparing expected arriving messages and correctly received messages.

In some embodiments, the example method 600 may comprise: detecting the congestion based on at least one of the following: the counter or the comparison.

In some embodiments, the example method 600 may comprise: determining the level of the congestion based on at least one of the following: the counter or the comparison.

In some embodiments, the counter may count messages, sequence number errors of which indicate losses of the messages.

In some embodiments, the counter may count messages which arrive later than a receive window.

In some embodiments, the first network device may be a RU, and the second network device may be a DU.

In some embodiments, the first network device may be a DU, and the second network device may be a scheduler of the DU.

In some embodiments, the example method 600 may comprise: transmitting the feedback via a fronthaul congestion detection message.

In some embodiments, the fronthaul congestion detection message may be at least one of the following: an eCPRI control plane message, an eCPRI management plane message, an eCPRI message type 5, or an eCPRI user plane message.

FIG. 7 shows a flow chart illustrating an example method 700 for fronthaul according to the example embodiments of the present disclosure. The example method 700 may be performed for example by an apparatus for a scheduler such as the scheduler 120 above mentioned.

Referring to the FIG. 7, the example method 700 may comprise: an operation 710 of monitoring a feedback notifying a status of congestion in fronthaul; and an operation 720 of performing at least one of the following: adjusting link adaptation, or adjusting radio resource allocations with a radio resource limit which restricts an amount of radio resources available per a time interval for a given cell or a group of cells.

In some embodiments, the example method 700 may comprise: if the feedback notifies the congestion, performing at least one of the following: adjusting the link adaptation based on a correlation between an increase of hybrid automatic repeat request non-acknowledgment, HARQ NACK and the congestion, or adjusting the radio resource allocations by reducing the radio resource limit by a step.

In some embodiments, the example method 700 may comprise: if the feedback notifies the congestion, adjusting the radio resource allocations by delaying a part of the radio resource allocations to a later time.

In some embodiments, the example method 700 may comprise: if the feedback notifies the congestion is relieved, performing at least one of the following: adjusting the link adaptation to fall back to the algorithm used prior to monitoring the feedback notifying the congestion, or adjusting the radio resource allocations by increasing the radio resource limit by a step.

In some embodiments, the example method 700 may comprise: determining the step based on, for the given cell or the group of cells, an estimated radio resource demand and a current value of the radio resource limit.

In some embodiments, the example method 700 may comprise: if the feedback comprises a level of the congestion, determining the step based on an estimated radio resource demand, a current value of the radio resource limit and the level of the congestion.

In some embodiments, the example method 700 may comprise: if the feedback notifies the congestion, until the feedback notifies the congestion is relieved, reducing the radio resource limit by the step through reducing a number of available spatial resources, until the number of the spatial resources reaches a minimum number, and reducing a number of available frequency resources.

In some embodiments, the example method 700 may comprise: if the feedback notifies the congestion is relieved, until the feedback notifies the congestion, increasing the radio resource limit by the step through increasing a number of available frequency resources, until the full bandwidth of the given cell or the group of cells is reached, and increasing a number of available spatial resources.

In some embodiments, the spatial resources comprises at least one of the following: spatial streams, or MIMO layers.

In some embodiments, the radio resource limit may be above or equal to a pre-defined minimum value.

In some embodiments, the example method 700 may comprise: predicting an eCPRI traffic pattern in the fronthaul based on previous congestions and previous adjustments of the radio resource allocations; and performing a proactive adjustment of the radio resource allocations based on the predicted eCPRI traffic pattern.

In some embodiments, the scheduler may be a MAC scheduler of a DU.

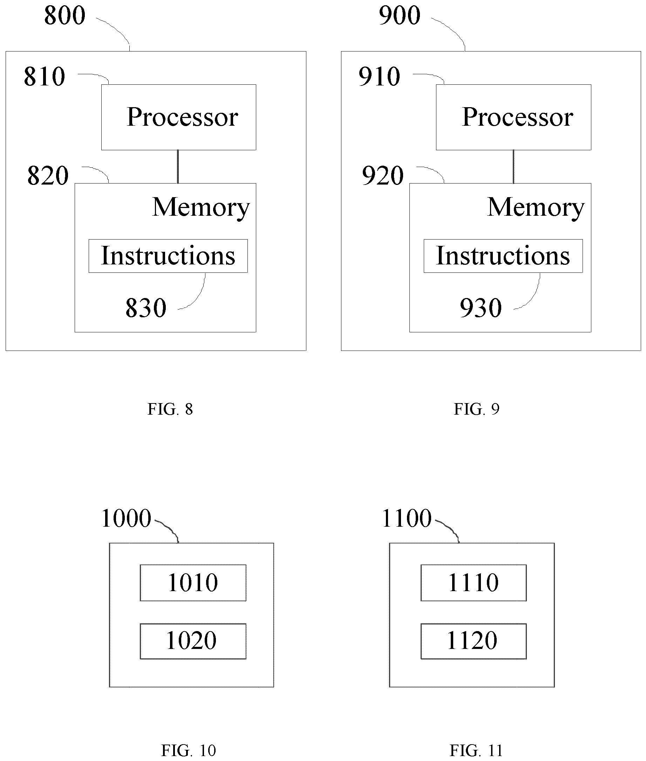

FIG. 8 shows a block diagram illustrating an example device 800 for fronthaul according to the example embodiments of the present disclosure. The device, for example, may be at least part of an apparatus for a first network device such as the DU 110 or the RU 130 in the above examples.

As shown in the FIG. 8, the example device 800 may include at least one processor 810 and at least one memory 820 that may store instructions 830. The instructions 830, when executed by the at least one processor 810, may cause the device 800 at least to perform the example method 600 described above.

In various example embodiments, the at least one processor 810 in the example device 800 may include, but not limited to, at least one hardware processor, including at least one microprocessor such as a central processing unit (CPU), a portion of at least one hardware processor, and any other suitable dedicated processor such as those developed based on for example Field Programmable Gate Array (FPGA) and Application Specific Integrated Circuit (ASIC). Further, the at least one processor 810 may also include at least one other circuitry or element not shown in the FIG. 8.

In various example embodiments, the at least one memory 820 in the example device 800 may include at least one storage medium in various forms, such as a transitory memory and/or a non-transitory memory. The transitory memory may include, but not limited to, for example, a random-access memory (RAM), a cache, and so on. The non- transitory memory may include, but not limited to, for example, a read only memory (ROM), a hard disk, a flash memory, and so on. The term "non-transitory," as used herein, is a limitation of the medium itself (i.e., tangible, not a signal) as opposed to a limitation on data storage persistency (e.g., RAM vs. ROM). Further, the at least memory 820 may include, but are not limited to, an electric, a magnetic, an optical, an electromagnetic, an infrared, or a semiconductor system, apparatus, or device or any combination of the above.

Further, in various example embodiments, the example device 800 may also include at least one other circuitry, element, and interface, for example at least one I/O interface, at least one antenna element, and the like.

In various example embodiments, the circuitries, parts, elements, and interfaces in the example device 800, including the at least one processor 810 and the at least one memory 820, may be coupled together via any suitable connections including, but not limited to, buses, crossbars, wiring and/or wireless lines, in any suitable ways, for example electrically, magnetically, optically, electromagnetically, and the like.

It is understood that the structure of the device on the side of the DU 110 or the RU 130 is not limited to the above example device 800.

FIG. 9 shows a block diagram illustrating an example device 900 for fronthaul according to the example embodiments of the present disclosure. The device, for example, may be at least part of an apparatus for a scheduler such as the scheduler 120 in the above examples.

As shown in the FIG. 9, the example device 900 may include at least one processor 910 and at least one memory 920 that may store instructions 930. The instructions 930, when executed by the at least one processor 910, may cause the device 900 at least to perform the example method 700 described above.

In various example embodiments, the at least one processor 910 in the example device 900 may include, but not limited to, at least one hardware processor, including at least one microprocessor such as a central processing unit (CPU), a portion of at least one hardware processor, and any other suitable dedicated processor such as those developed based on for example Field Programmable Gate Array (FPGA) and Application Specific Integrated Circuit (ASIC). Further, the at least one processor 910 may also include at least one other circuitry or element not shown in the FIG. 9.

In various example embodiments, the at least one memory 920 in the example device 900 may include at least one storage medium in various forms, such as a transitory memory and/or a non-transitory memory. The transitory memory may include, but not limited to, for example, a random-access memory (RAM), a cache, and so on. The non- transitory memory may include, but not limited to, for example, a read only memory (ROM), a hard disk, a flash memory, and so on. The term "non-transitory," as used herein, is a limitation of the medium itself (i.e., tangible, not a signal) as opposed to a limitation on data storage persistency (e.g., RAM vs. ROM). Further, the at least memory 620 may include, but are not limited to, an electric, a magnetic, an optical, an electromagnetic, an infrared, or a semiconductor system, apparatus, or device or any combination of the above.

Further, in various example embodiments, the example device 900 may also include at least one other circuitry, element, and interface, for example at least one I/O interface, at least one antenna element, and the like.

In various example embodiments, the circuitries, parts, elements, and interfaces in the example device 900, including the at least one processor 910 and the at least one memory 920, may be coupled together via any suitable connections including, but not limited to, buses, crossbars, wiring and/or wireless lines, in any suitable ways, for example electrically, magnetically, optically, electromagnetically, and the like.

It is understood that the structure of the device on the side of the scheduler 120 is not limited to the above example device 900.

FIG. 10 shows a block diagram illustrating an example apparatus 1000 for fronthaul according to the example embodiments of the present disclosure. The apparatus, for example, may be at least part of a first network device such as the DU 110 or the RU 130 in the above examples.

As shown in the FIG. 10, the example apparatus 1000 may comprise: means 1010 for detecting whether congestion occurs in fronthaul; and means 1020 for transmitting to a second network device, a feedback for notifying the congestion if detecting the congestion in the fronthaul.

In some embodiments, the apparatus 1000 may comprise means for determining a level of the congestion if detecting the congestion, wherein the feedback may notify the level of the congestion.

In some embodiments, the apparatus 1000 may comprise means for monitoring a counter for counting abnormal arriving messages.

In some embodiments, the apparatus 1000 may comprise means for comparing expected arriving messages and correctly received messages.

In some embodiments, the apparatus 1000 may comprise means for detecting the congestion based on at least one of the following: the counter or the comparison.

In some embodiments, the apparatus 1000 may comprise means for determining the level of the congestion based on at least one of the following: the counter or the comparison.

In some embodiments, the counter may count messages, sequence number errors of which indicate losses of the messages.

In some embodiments, the counter may count messages which arrive later than a receive window.

In some embodiments, the first network device may be a RU, and the second network device may be a DU.

In some embodiments, the first network device may be a DU, and the second network device may be a scheduler of the DU.

In some embodiments, the apparatus 1000 may comprise means for transmitting the feedback via a fronthaul congestion detection message.

In some embodiments, the fronthaul congestion detection message may be at least one of the following: an eCPRI control plane message, an eCPRI management plane message, an eCPRI message type 5, or an eCPRI user plane message.

In some example embodiments, examples of means in the example apparatus 1000 may include circuitries. For example, an example of means 1010 may include a circuitry configured to perform the operation 610 of the example method 600, and an example of means 1020 may include a circuitry configured to perform the operation 620 of the example method 600.

The example apparatus 1000 may further include means comprising circuitry configured to perform the example method 600. In some example embodiments, examples of means may also include software modules and any other suitable function entities.

FIG. 11 shows a block diagram illustrating an example apparatus 1100 for fronthaul according to the example embodiments of the present disclosure. The apparatus, for example, may be at least part of a scheduler such as the scheduler 120 in the above examples.

As shown in the FIG. 11, the example apparatus 1100 may comprise: means 1110 for monitoring a feedback notifying a status of congestion in fronthaul; and means 1120 for performing at least one of the following: adjusting link adaptation, or adjusting radio resource allocations with a radio resource limit which restricts an amount of radio resources available per a time interval for a given cell or a group of cells.

In some embodiments, the apparatus 1100 may comprise means for, if the feedback notifies the congestion, performing at least one of the following: adjusting the link adaptation based on a correlation between an increase of hybrid automatic repeat request non-acknowledgment, HARQ NACK and the congestion, or adjusting the radio resource allocations by reducing the radio resource limit by a step.

In some embodiments, the apparatus 1100 may comprise means for, if the feedback notifies the congestion, adjusting the radio resource allocations by delaying a part of the radio resource allocations to a later time.

In some embodiments, the apparatus 1100 may comprise means for, if the feedback notifies the congestion is relieved, performing at least one of the following: adjusting the link adaptation to fall back to the algorithm used prior to monitoring the feedback notifying the congestion, or adjusting the radio resource allocations by increasing the radio resource limit by a step.

In some embodiments, the apparatus 1100 may comprise means for determining the step based on, for the given cell or the group of cells, an estimated radio resource demand and a current value of the radio resource limit.

In some embodiments, the apparatus 1100 may comprise means for, if the feedback comprises a level of the congestion, determining the step based on an estimated radio resource demand, a current value of the radio resource limit and the level of the congestion.

In some embodiments, the apparatus 1100 may comprise means for, if the feedback notifies the congestion, until the feedback notifies the congestion is relieved, reducing the radio resource limit by the step through reducing a number of available spatial resources, until the number of the spatial resources reaches a minimum number, and means for reducing a number of available frequency resources.

In some embodiments, the apparatus 1100 may comprise means for, if the feedback notifies the congestion is relieved, until the feedback notifies the congestion, increasing the radio resource limit by the step through increasing a number of available frequency resources, until the full bandwidth of the given cell or the group of cells is reached, and means for increasing a number of available spatial resources.

In some embodiments, the spatial resources comprises at least one of the following: spatial streams, or MIMO layers.

In some embodiments, the radio resource limit may be above or equal to a pre-defined minimum value.

In some embodiments, the apparatus 1100 may comprise means for predicting an eCPRI traffic pattern in the fronthaul based on previous congestions and previous adjustments of the radio resource allocations; and means for performing a proactive adjustment of the radio resource allocations based on the predicted eCPRI traffic pattern.

In some embodiments, the scheduler may be a MAC scheduler of a DU.

In some example embodiments, examples of means in the example apparatus 1100 may include circuitries. For example, an example of means 1110 may include a circuitry configured to perform the operation 710 of the example method 700, and an example of means 1120 may include a circuitry configured to perform the operation 720 of the example method 700.

The example apparatus 1100 may further include means comprising circuitry configured to perform the example method 700. In some example embodiments, examples of means may also include software modules and any other suitable function entities.

The example embodiments of the present disclosure also provide a computer readable medium comprising program instructions that, when executed by an apparatus for a first network device such as the DU 110 or the RU 130 in the above examples, may cause the apparatus at least to: detect whether congestion occurs in fronthaul; and transmit to a second network device, a feedback for notifying the congestion if detecting the congestion in the fronthaul.

In some embodiments, the computer readable medium may include instructions that, when executed by the apparatus, may cause the apparatus to: determine a level of the congestion if detecting the congestion, wherein the feedback may notify the level of the congestion.

In some embodiments, the computer readable medium may include instructions that, when executed by the apparatus, may cause the apparatus to: monitor a counter for counting abnormal arriving messages.

In some embodiments, the computer readable medium may include instructions that, when executed by the apparatus, may cause the apparatus to: compare expected arriving messages and correctly received messages.

In some embodiments, the computer readable medium may include instructions that, when executed by the apparatus, may cause the apparatus to: detect the congestion based on at least one of the following: the counter or the comparison.

In some embodiments, the computer readable medium may include instructions that, when executed by the apparatus, may cause the apparatus to: determine the level of the congestion based on at least one of the following: the counter or the comparison.

In some embodiments, the counter may count messages, sequence number errors of which indicate losses of the messages.

In some embodiments, the counter may count messages which arrive later than a receive window.

In some embodiments, the first network device may be a RU, and the second network device may be a DU.

In some embodiments, the first network device may be a DU, and the second network device may be a scheduler of the DU.

In some embodiments, the computer readable medium may include instructions that, when executed by the apparatus, may cause the apparatus to: transmit the feedback via a fronthaul congestion detection message.

In some embodiments, the fronthaul congestion detection message may be at least one of the following: an eCPRI control plane message, an eCPRI management plane message, an eCPRI message type 5, or an eCPRI user plane message.

The example embodiments of the present disclosure also provide a computer readable medium comprising program instructions that, when executed by an apparatus for a scheduler such as the scheduler 120 in the above examples, may cause the apparatus at least to: monitor a feedback notifying a status of congestion in fronthaul; and perform at least one of the following: adjusting link adaptation, or adjusting radio resource allocations with a radio resource limit which restricts an amount of radio resources available per a time interval for a given cell or a group of cells.

In some embodiments, the computer readable medium may include instructions that, when executed by the apparatus, may cause the apparatus to: if the feedback notifies the congestion, perform at least one of the following:

adjusting the link adaptation based on a correlation between an increase of hybrid automatic repeat request non-acknowledgment, HARQ NACK and the congestion, or adjusting the radio resource allocations by reducing the radio resource limit by a step.

In some embodiments, the computer readable medium may include instructions that, when executed by the apparatus, may cause the apparatus to: if the feedback notifies the congestion, adjust the radio resource allocations by delaying a part of the radio resource allocations to a later time.

In some embodiments, the computer readable medium may include instructions that, when executed by the apparatus, may cause the apparatus to: if the feedback notifies the congestion is relieved, perform at least one of the following: adjusting the link adaptation to fall back to the algorithm used prior to monitoring the feedback notifying the congestion, or adjusting the radio resource allocations by increasing the radio resource limit by a step.

In some embodiments, the computer readable medium may include instructions that, when executed by the apparatus, may cause the apparatus to: determine the step based on, for the given cell or the group of cells, an estimated radio resource demand and a current value of the radio resource limit.

In some embodiments, the computer readable medium may include instructions that, when executed by the apparatus, may cause the apparatus to: if the feedback comprises a level of the congestion, determine the step based on an estimated radio resource demand, a current value of the radio resource limit and the level of the congestion.

In some embodiments, the computer readable medium may include instructions that, when executed by the apparatus, may cause the apparatus to: if the feedback notifies the congestion, until the feedback notifies the congestion is relieved, reduce the radio resource limit by the step through reducing a number of available spatial resources, until the number of the spatial resources reaches a minimum number, and reduce a number of available frequency resources.

In some embodiments, the computer readable medium may include instructions that, when executed by the apparatus, may cause the apparatus to: if the feedback notifies the congestion is relieved, until the feedback notifies the congestion, increase the radio resource limit by the step through increasing a number of available frequency resources, until the full bandwidth of the given cell or the group of cells is reached, and increase a number of available spatial resources.

In some embodiments, the spatial resources comprises at least one of the following: spatial streams, or MIMO layers.

In some embodiments, the radio resource limit may be above or equal to a pre-defined minimum value.

In some embodiments, the computer readable medium may include instructions that, when executed by the apparatus, may cause the apparatus to: predict an eCPRI traffic pattern in the fronthaul based on previous congestions and previous adjustments of the radio resource allocations; and perform a proactive adjustment of the radio resource allocations based on the predicted eCPRI traffic pattern.

In some embodiments, the scheduler may be a MAC scheduler of a DU.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

The term "terminal device" refers to any end device that may be capable of wireless communication. By way of example rather than limitation, a terminal device may also be referred to as a communication device, user equipment (UE), a Subscriber Station (SS), a Portable Subscriber Station, a Mobile Station (MS), or an Access Terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. The terminal device may also correspond to a Mobile Termination (MT) part of an IAB node (e.g., a relay node). In the above description, the terms "terminal device", "communication device", "terminal", "user equipment" and "UE" may be used interchangeably.

The term "circuitry" throughout this disclosure may refer to one or more or all of the following: (a) hardware-only circuit implementations (such as implementations in only analog and/or digital circuitry); (b) combinations of hardware circuits and software, such as (as applicable) (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions); and (c) hardware circuit(s) and or processor(s), such as a microprocessor(s) or a portion of a microprocessor(s), that requires software (e.g., firmware) for operation, but the software may not be present when it is not needed for operation. This definition of circuitry applies to one or all uses of this term in this disclosure, including in any claims. As a further example, as used in this disclosure, the term circuitry also covers an implementation of merely a hardware circuit or processor (or multiple processors) or portion of a hardware circuit or processor and its (or their) accompanying software and/or firmware. The term circuitry also covers, for example and if applicable to the claim element, a baseband integrated circuit or processor integrated circuit for a mobile device or a similar integrated circuit in server, a cellular network device, or other computing or network device.

Another example embodiment may relate to computer program codes or instructions which may cause an apparatus to perform at least respective methods described above. Another example embodiment may be related to a computer readable medium having such computer program codes or instructions stored thereon. In some embodiments, such a computer readable medium may include at least one storage medium in various forms such as a volatile memory and/or a non-volatile memory. The volatile memory may include, but not limited to, for example, a RAM, a cache, and so on. The non-volatile memory may include, but not limited to, a ROM, a hard disk, a flash memory, and so on. The non-volatile memory may also include, but are not limited to, an electric, a magnetic, an optical, an electromagnetic, an infrared, or a semiconductor system, apparatus, or device or any combination of the above.

Unless the context clearly requires otherwise, throughout the description and the claims, the words "comprise," "comprising," and the like are to be construed in an inclusive sense, as opposed to an exclusive or exhaustive sense; that is to say, in the sense of "including, but not limited to." The word "coupled", as generally used herein, refers to two or more elements that may be either directly connected, or connected by way of one or more intermediate elements. Likewise, the word "connected", as generally used herein, refers to two or more elements that may be either directly connected, or connected by way of one or more intermediate elements. Additionally, the words "herein," "above," "below," and words of similar import, when used in this application, shall refer to this application as a whole and not to any particular portions of this application. Where the context permits, words in the description using the singular or plural number may also include the plural or singular number respectively. The word "or" in reference to a list of two or more items, that word covers all of the following interpretations of the word: any of the items in the list, all of the items in the list, and any combination of the items in the list.

Moreover, conditional language used herein, such as, among others, "can," "could," "might," "may," "e.g.," "for example," "such as" and the like, unless specifically stated otherwise, or otherwise understood within the context as used, is generally intended to convey that certain embodiments include, while other embodiments do not include, certain features, elements and/or states. Thus, such conditional language is not generally intended to imply that features, elements and/or states are in any way required for one or more embodiments or that one or more embodiments necessarily include logic for deciding, with or without author input or prompting, whether these features, elements and/or states are included or are to be performed in any particular embodiment.

As used herein, the term "determine/determining" (and grammatical variants thereof) can include, not least: calculating, computing, processing, deriving, measuring, investigating, looking up (for example, looking up in a table, a database or another data structure), ascertaining and the like. Also, "determining" can include receiving (for example, receiving information), accessing (for example, accessing data in a memory), obtaining and the like. Also, "determine/-determining" can include resolving, selecting, choosing, establishing, and the like.

While some embodiments have been described, these embodiments have been presented by way of example, and are not intended to limit the scope of the disclosure. Indeed, the apparatus, methods, and systems described herein may be embodied in a variety of other forms; furthermore, various omissions, substitutions and changes in the form of the methods and systems described herein may be made without departing from the spirit of the disclosure. For example, while blocks are presented in a given arrangement, alternative embodiments may perform similar functionalities with different components and/or circuit topologies, and some blocks may be deleted, moved, added, subdivided, combined, and/or modified. At least one of these blocks may be implemented in a variety of different ways. The order of these blocks may also be changed. Any suitable combination of the elements and actions of the some embodiments described above can be combined to provide further embodiments. The accompanying claims and their equivalents are intended to cover such forms or modifications as would fall within the scope and spirit of the disclosure.

Abbreviations used in the description and/or in the figures are defined as follows:

| | |
|---|---|
| ACK | acknowledge |
| BBU | baseband units |
| BLER | block error rate |
| C-Plane | control plane |
| CPU | central processing unit |
| CQI | channel quality indicator |
| CUS | Control, User and Synchronization Plane Specification |
| DU | distributed unit |
| eCPRI | enhanced common public radio interface |
| HARQ | hybrid automatic repeat request |

# EP 4 633 109 A1

ILLA        inner-loop link adaptation
IQ          in-phase and quadrature
KPI         key performance indicator
L1          layer 1
L2          layer 2
MAC         medium access control
MCS         modulation and coding scheme
MIMO        multiple-input multiple-output
M-Plane     management plane
MU          multi-user
NACK        non-acknowledge
OLLA        outer-loop link adaptation
O-RAN       open radio access network
PDSCH       physical downlink shared channel
PRB         physical resource block
PDV         packet delay variation
PMI         precoding matrix indicator
RAN         radio access network
RI          rank indication
RLC         radio link control
RRM         radio resource management
RU          radio unit
SU          single-user
TB          transport block
TDD         time division duplex
UE          user equipment
U-Plane     user plane

**Claims**

1.  A method performed by an apparatus for a first network device, comprising:

    detecting whether congestion occurs in fronthaul; and
    transmitting to a second network device, a feedback for notifying the congestion if detecting the congestion in the fronthaul.

2.  The method of claim 1, comprising:

    determining a level of the congestion if detecting the congestion, wherein
    the feedback notifies the level of the congestion.

3.  The method of claim 1 or 2, comprising:
    monitoring a counter for counting abnormal arriving messages.

4.  The method of any of claims 1 to 3, comprising:
    comparing expected arriving messages and correctly received messages.

5.  The method of claim 3 or 4, comprising:
    detecting the congestion based on at least one of the following: the counter or the comparison.

6.  The method of any of claims 3 to 5, comprising:
    determining the level of the congestion based on at least one of the following: the counter or the comparison.

7.  The method of any of claims 3 to 6, wherein the counter counts messages, sequence number errors of which indicate losses of the messages or the counter counts messages which arrive later than a receive window.

8.  A method performed by an apparatus for a scheduler, comprising:

monitoring a feedback notifying a status of congestion in fronthaul; and
performing at least one of the following:

adjusting link adaptation, or
adjusting radio resource allocations with a radio resource limit which restricts an amount of radio resources available per a time interval for a given cell or a group of cells.

9. The method of claim 8, comprising:
if the feedback notifies the congestion, performing at least one of the following:

adjusting the link adaptation based on a correlation between an increase of hybrid automatic repeat request non-acknowledgment, HARQ NACK and the congestion, or
adjusting the radio resource allocations by reducing the radio resource limit by a step.

10. The method of claim 9, comprising:
if the feedback notifies the congestion, adjusting the radio resource allocations by delaying a part of the radio resource allocations to a later time.

11. The method of any of claims 8 to 10, comprising:
if the feedback notifies the congestion is relieved, performing at least one of the following:

adjusting the link adaptation to fall back to the algorithm used prior to monitoring the feedback notifying the congestion, or
adjusting the radio resource allocations by increasing the radio resource limit by a step.

12. The method of any of claims 9 to 11, comprising:
determining the step based on, for the given cell or the group of cells, an estimated radio resource demand and a current value of the radio resource limit.

13. The method of any of claims 9 to 12, comprising:
if the feedback comprises a level of the congestion, determining the step based on an estimated radio resource demand, a current value of the radio resource limit and the level of the congestion.

14. The method of any of claims 9 to 13, comprising:
if the feedback notifies the congestion, until the feedback notifies the congestion is relieved, reducing the radio resource limit by the step through

reducing a number of available spatial resources, until the number of the spatial resources reaches a minimum number, and
reducing a number of available frequency resources.

15. The method of any of claims 9 to 14, comprising:
if the feedback notifies the congestion is relieved, until the feedback notifies the congestion, increasing the radio resource limit by the step through

increasing a number of available frequency resources, until the full bandwidth of the given cell or the group of cells is reached, and
increasing a number of available spatial resources.

16. An apparatus for a first network device, comprising means for performing the method of any of claims 1 to 7.

17. An apparatus for a scheduler, comprising means for performing the method of any of claims 8 to 15.

FIG. 1

FIG. 2

FIG. 3A

FIG. 3B

410: Normal operation

420: Congestion

470: RES_LIMIT = cell max

430: Radio resource shaping

432: Reducing RES_LIMIT with bigger step if congestion

434: Increasing RES_LIMIT with smaller step if congestion relieved

440: RES_LIMIT < radio resource demand

460: RES_LIMIT >= radio resource demand

450: Radio resource throttling

452: Reducing RES_LIMIT with smaller step if congestion

454: Increasing RES_LIMIT with smaller step if congestion relieved

FIG. 4

510: Setting RES_LIMIT to max

515: Congestion?

Yes

No

525: RES_LIMIT < radio resource demand ?

545: RES_LIMIT = max ?

Yes

Yes

No

No

535: Reducing RES_LIMIT with smaller step

530: Reducing RES_LIMIT with bigger step

550: Increasing RES_LIMIT with smaller step

FIG. 5

600

610

Detecting whether congestion occurs in fronthaul

620

Transmitting feedback

FIG. 6

700

710

Monitoring feedback notifying status of congestion in fronthaul

720

Adjusting link adaptation and/or
adjusting radio resource allocations

FIG. 7

800

810

Processor

820

Memory

Instructions

830

FIG. 8

900

910

Processor

920

Memory

Instructions

930

FIG. 9

1000

1010

1020

FIG. 10

1100

1110

1120

FIG. 11

Europäisches
Patentamt

European
Patent Office

Office européen
des brevets

# EUROPEAN SEARCH REPORT

**Application Number**

EP 25 16 8172

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 531 638 A1 (NOKIA SOLUTIONS & NETWORKS GMBH & CO KG [DE]) 28 August 2019 (2019-08-28) * paragraph [0001;0033] - paragraph [0038]; figures 1-3 * * paragraph [0044] - paragraph [0053] * ----- | 1-8,16, 17 | INV. H04L47/11 H04L47/12 H04W28/02 |
| X | US 2022/110017 A1 (MEDEIROS EDUARDO [SE] ET AL) 7 April 2022 (2022-04-07) * paragraph [0016;0027] - paragraph [0033]; figures 1-5 * * paragraph [0039] - paragraph [0066] * ----- | 1,8-17 | |
| A | WO 2023/208386 A1 (ERICSSON TELEFON AB L M [SE]) 2 November 2023 (2023-11-02) * the whole document * ----- | 1-17 | |

| | |
|---|---|
| | **TECHNICAL FIELDS SEARCHED (IPC)** |
| | H04L H04W |

The present search report has been drawn up for all claims

| Place of search | Date of completion of the search | Examiner |
|---|---|---|
| The Hague | 5 September 2025 | Svet, Victor |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 16 8172

This annex lists the patent family members relating to the patent documents cited in the above-mentioned European search report.
The members are as contained in the European Patent Office EDP file on
The European Patent Office is in no way liable for these particulars which are merely given for the purpose of information.

05-09-2025

| Patent document cited in search report | | Publication date | Patent family member(s) | | Publication date |
|---|---|---|---|---|---|
| EP 3531638 | A1 | 28-08-2019 | NONE | | |
| US 2022110017 | A1 | 07-04-2022 | EP | 3915298 A1 | 01-12-2021 |
| | | | US | 2022110017 A1 | 07-04-2022 |
| | | | WO | 2020151800 A1 | 30-07-2020 |
| WO 2023208386 | A1 | 02-11-2023 | EP | 4515388 A1 | 05-03-2025 |
| | | | WO | 2023208386 A1 | 02-11-2023 |

EPO FORM P0459

For more details about this annex : see Official Journal of the European Patent Office, No. 12/82